# EUROPEAN PATENT APPLICATION

(11) **EP 2 261 470 A1**
(43) Date of publication of application: **15.12.2010**
(21) Application number: 09162176.3
(22) Date of filing: 08.06.2009
(51) Int. Cl.: F01L 7/10, F02B 27/04

(54) **Internal combustion engine with spherical rotary valve**

(71) Applicant: Crosset, Léon, 4890 Thimister (BE)
(72) Inventor: Crosset, Léon, 4890 Thimister (BE)
(74) Representative: Vandeberg, Marie-Paule L.G.

(57) **Abstract**

A cylinder head assembly (2) at least a first rotary valve (5), said valve,
• having a substantially spherical body and
• comprising
o a first opening (31) to the exhaust duct substantially parallel to the valve central axis of rotation, and
o a second opening that can be intermittently brought into fluid communication with the combustion chamber, and further comprising
• a shaft fixed to the valve and coaxial with the valve central axis of rotation and located opposite the exhaust duct, said shaft being connected to a drive for rotating the valve in correspondance to the operating strokes of the piston in the cylinder.

## Description

### Field of the invention

The invention relates to internal combustion engines equipped with one or more spherical rotary valves.

### Background of the invention

There is a general trend to build internal combustion engines combining high specific power to keep the engine compact, with high efficiency to avoid fuel losses and air pollution. Such can be attained by enhancing the compression ratio, the valves tightness, the filling and emptying of the cylinders, etc. At the same time the reliability of the engine must be ensured.

### Description of prior art

The cylinders of conventional four stroke internal combustion engines have been for a long time equipped with only mushroom or poppet valves. However, the reciprocating motion of the valves is problematic at high revolutions because of their inertia which can lead to a synchronisation loss with the motor revolutions regime. Moreover, poppet valves induce important head losses, which is detrimental to a good cylinder filling.

Two stroke engines do not need any poppet valve as the exhaust outlet and the gas transfer inlets are located on the cylinder wall. The incomplete closure of the exhaust outlet while unburnt gas is being transferred into the combustion chamber, however, renders traditional two stroke engines particularly polluting.

Combinations of a poppet valve with one or more rotary valves were also considered as disclosed in DE 199 43 305 and GB 2 261 025. The aim was here to increase cylinder filling whilst keeping the combustion chamber tight during the compression and power strokes.

Further improvements led to the use of rotary valves alone as disclosed in GB 2 269 857 (Fig.16). The use of rotary valves in place of poppet valves can be advantageous since the rotary valves offer more favourable flow conditions of gases into and/or out of the combustion chamber. Furthermore, rotary valves are not speed limited in the same way as the spring loaded poppet valves. The rotary valves are here foreseen with a through gas passageway.

EP 0 551 504 discloses cylindrical rotary valves showing two curved channels which may join together at one end being in fluid communication with the combustion chamber. In case of a two stroke engine, the valves have then the same rotation speed as the engine, which avoids to provide cumbersome speed reducing means as in the case of the through passage of GB 2 269 857 (Fig.16). However, the irregular shape of the channels would cause important head losses detrimental to a good cylinder filling and/or emptying.

In the text below an axial flow rotary valve is defined as one in which the axis of rotation of the valve is substantially normal to the cylinder axis and the valve inlet duct for injecting fresh fuel & air into the combustion chamber for four stroke engines, or the outlet duct for releasing the exhaust gases are substantially parallel to said valve axis of rotation.

Better, axial flow conditions inside cylindrical rotary valves are disclosed in US 008078351, US 5315969 and US 5052349. Moreover, from Fig. 7 of the latter document illustrating the power/exhaust stroke in a two stroke engine it can be seen that the absence of exhaust port in the cylinder wall enables the compression ratio to be increased. Nevertheless, cylindrical rotary valves turned out to be ineffective to seal the passage between the combustion chamber and the rotary valve.

US 20040107937, US 6666458 and DE 4027311 relate to spherical non axial flow rotary valves sitting on sealing means to seal the passage between the combustion chamber and the rotary valve, thereby providing a better tightness at said passage than cylindrical valves.

US 7328680 discloses spherical axial flow rotary valves combining compactness, favourable flow conditions and sealing characteristics. Here again, as for cylindrical valves, the curved channel opening on an axis parallel to the valve rotational axis is advantageous for the coordination between valve and engine rotary speeds. Each valve is supported on one of its sides on an axle received in an axle race, and on its other side on a support sleeve received in a race and being in gaseous communication with a manifold. However, the sleeve of the exhaust valve undergoes the hot temperature of the exhaust gases and may thus jam due to its thermal expansion in its race.

DE 4017819 relates to an axial flow spherical rotary valve with combined intake and exhaust, which is supported on both its intake and exhaust sides on bearings. The construction described therein of holding the sphere with bearings on both sides thereof is the commonly used in all spherical valves. In the case of a curved channel, however, this construction is problematic, since on the exhaust side of the valve, the bearings are fixed to a hollow axle carrying combusted gases into the exhaust duct. The temperature of the exhaust axle may vary from ambient when the engine is started, to several hundreds degrees when the engine has been running for a long time, thus generating large thermal expansions, impossible to be accommodated by the bearings. The presence of bearings around the exhaust axle is thus detrimental to the operational reliability of the rotary valve as they may jam due to the thermal expansion of the valve hollow exhaust axle.

There remains thus a need for an internal combustion engine combining high specific power with high efficiency, whilst being fully reliable, even at high revolutions regimes and after long times of running.

### Summary of the invention

The object of the invention is to provide an internal combustion engine of simple and cheap construction, delivering a high specific power coupled with high efficiency and reliability. The present invention is defined in the appended independent claims. Preferred embodiments are defined in the dependent claims.

In particular, the present invention concerns a cylinder head assembly for an internal combustion engine having at least one cylinder housing containing a reciprocally movable piston along the central axis of revolution thereof, and a combustion chamber on top of said piston, wherein said cylinder head assembly comprises a cavity in fluid communication with said combustion chamber, and at least a first rotary valve nested in said cavity, said valve,
- having a substantially spherical body defining a central axis of rotation normal to the cylinder central axis and
- comprising a passageway there through to bring the combustion chamber into intermittent fluid communication with an exhaust duct for evacuating the burnt gases, said passageway comprising a 90 deg bend and connecting:
- a first opening to the exhaust duct substantially parallel to, preferably coaxial with the valve central axis of rotation, to
- a second opening, such that by rotation of the valve round its axis of rotation, said second opening can be intermittently brought into fluid communication with the combustion chamber, and further comprising
- a shaft fixed to the valve and coaxial with the valve central axis of rotation and located opposite the exhaust duct, said shaft comprising connecting means to a drive for rotating the valve in correspondence with the operating strokes of the piston in the cylinder, and wherein,
- the valve is rotatably mounted within the cylinder head assembly through one or several bearings, all exclusively mounted on said shaft such that the valve is mounted in cantilever on its shaft.

The use of such axial flow spherical rotary valves is advantageous in many respects. It offers better flowing conditions and thus better cylinder filling/emptying conditions. As the movement of a rotary valve is continuous and not reciprocal as is the case with a poppet valve, it may run at higher revolutions than the latter. The sealing between the valve and the combustion chamber is easier to ensure, than with cylindrical rotary valves, thus maintaining higher levels of compression. Moreover, in case of two stroke engines the use of a spherical exhaust valve allows to get rid of the exhaust opening on the cylinder wall of conventional engines, thus permitting to reduce the number of ports on the cylinder wall and hence to increase the compression stroke and the compression ratio, thus yielding a higher engine efficiency.

The gist of the invention is to rotatably mount the valve in cantilever on a shaft on one side only of the valve, the one opposite the exhaust duct, to avoid extreme thermal variations and thus thermal expansion of the exhaust shaft, which would jam the bearings of the rotary valves of the prior art.

The present invention also concerns an engine comprising a cylinder head as defined supra. The engine may be a two-stroke or a four-stroke engine. In the former, the cylinder head may comprise a single rotary valve, called herein 'exhaust valve', for the release of the burnt gases leaving the combustion chamber. In four-stroke engines, the cylinder head may comprise an exhaust valve as for two-stroke engines, but also a second rotary valve for injecting fuel and air into the combustion chamber, called herein an 'injection valve'.

Various embodiments of the claimed invention are envisaged and explained more in details in the following.

### Short description of the drawings

These and further aspects of the invention will be explained in greater detail by way of example and with reference to the accompanying drawings wherein:
- Fig.1: is a transverse cut of a two-stroke engine according to the present invention;
- Fig.2: is transverse cut of a four-stroke engine according to the present invention;
- Fig.3: is a transverse cut of a rotary valve mounted in cantilever within the cylinder head of the present invention;
- Fig. 4: is a three-dimensional view of the valve of Figure 3.

The figures are not drawn to scale. Generally, identical components are denoted by the same reference numerals in the figures.

### Detailed description of preferred embodiments

### 1 CYLINDER HEAD ASSEMBLY

The cylinder head assembly (2) of the present invention is to be located on top of at least one cylinder housing containing a reciprocally movable piston (4) along the central axis of revolution thereof. A combustion chamber (3) is defined by the volume defined by the cylinder lateral walls, the top of said piston, and the top wall of the cylinder, the latter being in fluid communication with the cylinder head (2). The cylinder head assembly (2) comprises at least a first rotary 'exhaust valve' (5) in fluid communication with said combustion chamber (3) and an exhaust duct (10). The cylinder head assembly (2) of the present invention may also comprise an 'injection valve' in fluid communication with a fuel & air injection line (20). Injection valves are useful for four-stroke engines only, whilst exhaust valves can be used in both two- and four-stroke engines. It is essential to the present invention that the claimed assembly comprises at least one exhaust rotary valve as described hereinbelow.

The rotary valve (5) has a substantially spherical body defining a central axis of rotation normal to the cylinder central axis. It also comprises a passageway (6) therethrough in fluid communication between the combustion chamber and an exhaust duct (10) for evacuating the burnt gases. Said passageway (6) comprises a 90 deg bend and connects:
- a first opening (31) to the exhaust duct substantially parallel to, preferably coaxial with the valve central axis of rotation, to
- a second opening (30), such that by rotation of the valve (5) round its axis of rotation, said second opening can be intermittently brought into fluid communication with the combustion chamber.

The valve (5) also comprises a shaft (7) fixed to the valve and coaxial with the valve central axis of rotation and located opposite the exhaust duct (10), said shaft comprising connecting means to a drive for rotating the valve in correspondence to the operating strokes of the piston in the cylinder. The shaft (7) is used to rotatably mount the valve within the cylinder head assembly through one or several bearings (8). In order to avoid any problem related with thermal expansion of the side of the valve exposed to the exhausted gases, the valve is mounted in cantilever with the bearings (8) are all exclusively mounted around said shaft (7). This is highly advantageous over known designs because the shaft temperature does not vary substantially during the running of the engine, whilst the exhaust duct side of the valve (5) is exposed to wide temperature variations and, hence, to substantial thermal expansion.

In a preferred embodiment, the valve first passageway opening (31) to the exhaust duct (10) is provided with a beak (9) jutting out of the sphere's wall and engaging into an inlet section of the exhaust duct (10) having a complementary geometry such that the burnt gases leaving the passageway's beak undergo a venturi effect preventing them from flowing backwards into the circumferential gap between the beak and the inlet section of the exhaust duct. This simple solution ensures that substantially all the exhausted gases are led into the exhaust duct.

In order to ensure gas tightness of the valve, it preferably sits snugly on sealing means to seal the passage between the combustion chamber and the rotary valve. Belleville type washers are particularly suitable for this purpose. The simplicity and efficacy of the sealing of spherical valves makes them particularly advantageous over cylindrical valves.

Similarly, the passage between the shaft (7) and the cylinder head cavity (5A) may also be provided with sealing means (13); here again Belleville type washers are particularly suitable.

The valve (5) is mounted in cantilever on shaft (7) through at least one bearing (8). In order to further ensure the valve stability on its axis upon rotation thereof, it is advantageous to use at least two bearings (8) to support shaft (7) at two different positions. The use of more bearings is of course possible. Any type of bearings suitable for rotatably supporting valve (5) may be used and their specific type is not critical to the present invention.

The through passage (6) across the valve body, fluidly connecting the first opening (31) to the second opening (30) may have a constant cross-section on both sides of the bend. It is preferred, however, that the second opening (30) intermittently facing the passage from the cylinder head assembly (2) to the combustion chamber (3) have a larger cross-section than the first opening (30) to the exhaust duct. This allows the exhaust of burnt gases to take place for a longer time at a constant revolution rate, or to ensure a sufficient time for exhausting gases at higher revolution rates of the engine. To this effect, it is preferred if the second opening (30) be elongated in the direction of valve rotation; for example it may be an ellipse with its short axis parallel to the rotation axis of the valve and its long axis normal thereto. It is also possible to offset the opening with respect to the axis of rotation of the valve. This is particularly advantageous when more than one rotational valve is used and their respective angular positions on the shaft must be optimized for capturing the remaining burnt gases, without opening the passage too soon.

The cylinder head assembly of the present invention is equally suitable for two-stroke and four-stroke engines. For two-stroke engines, a single exhaust rotary valve per cylinder is sufficient as will be explained below. Four-stroke engines, on the other hand, require an additional fuel & air injection valve. This of course could be a poppet valve, but the use of a poppet valve would obviously not solve the problem associated therewith at high revolution regimes. For this reason it is highly advantageous to provide the cylinder head assembly with a second rotary valve (25), which can be brought in intermittent fluid communication with the combustion chamber (3), said valve having a substantially spherical body defining a central axis of rotation located on a plane normal to the axis of revolution of the cylinder, said plane comprising the central axis of rotation of the first rotary valve. Preferably the two axes are parallel to, or coaxial with each other. Said second valve comprises a passageway there through, having a 90 deg bend and connecting:
- a first opening (31A) to a fuel & air injection line (20), wherein the passageway is substantially parallel to, preferably coaxial with the valve central axis of rotation, and
- a second opening (30A) to the combustion chamber (3), such that by rotation of the valve round its axis of rotation, said second opening can be intermittently brought into fluid communication with the combustion chamber.

Since fuel & air injection and burnt gases exhaust should not happen simultaneously, the first, exhaust (5), and the second, injection (25), rotary valves are so mounted that upon rotation round their respective axis of rotation, the facing of their respective second openings (30, 30A) with the combustion chamber is off phase. The second, injection, rotary valve (25) may, but does not require to be mounted in cantilever since, unlike the exhaust valve, both sides of the rotation axis thereof are at substantially constant temperature.

### 2 COMBUSTION MOTOR COMPRISING A CYLINDER HEAD ASSEMBLY

The present invention also concerns internal combustion engines comprising a cylinder head assembly as described in the previous section. An internal combustion engine is characterized by at least one cylinder housing containing a reciprocally movable piston along the central axis of revolution thereof, and a combustion chamber (3) enclosed between the cylinder lateral wall, the top surface of the piston, and the top wall of the cylinder. The top wall of the cylinder is open to bring in fluid communication said combustion chamber with a cylinder head assembly located on top of the cylinder. The cylinder head assembly (2) comprises at least one rotary valve (5) as described in the previous section. Upon rotation of the rotary valve (5), the second opening (30) is brought intermittently in fluid communication with the combustion chamber (3). The rotation speed of the valve must be synchronized with the motion of the piston. In a four-stroke engine the exhaust valve (5) brings every second stroke the combustion chamber (3) into fluid communication with the exhaust duct (10) when the piston is moving up the cylinder to push the burnt gases out of the cylinder. In two-stroke engines, however, this happens once every stroke and the fluid communication between the combustion chamber (3) and the exhaust duct (10) should only last a fraction of the ascension time of the piston. In the present context, the expressions "piston moving up/down the cylinder", "ascension/descent" and their derivatives mean reducing/increasing, respectively, the volume of the combustion chamber regardless of the actual orientation of the cylinder in space, and regardless of whether the piston is really moving vertically up or down with respect to the earth.

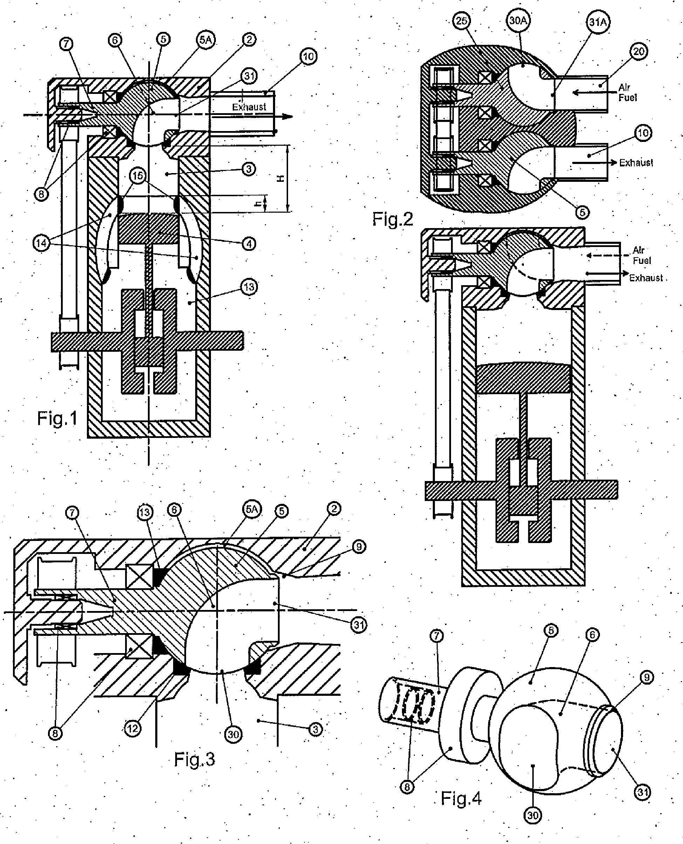

Traditional two-stroke engines usually do not need any valve. As shown in Figure 1, the fuel & air mixture is injected in the lower part (13) of the engine, below the piston. Transfer ducts (14) fluidly connect the lower part of the engine to the combustion chamber opening therein through transfer ports (15) located round the wall of the cylinder, at a level just above the piston top when it is located at its lowest position. When the piston runs down the cylinder, it compresses the fuel & air mixture present in the lower part of the engine and frees the passage of the transfer ports (15) allowing pre-compressed fuel & air to be transferred into the combustion chamber. As the piston runs up the cylinder, the fuel mixture is further compressed and ignited with a sparking plug (not shown) whilst fresh fuel & air mixture is injected into the lower part of the engine. The explosion drives the piston down the cylinder and the cycle is repeated. The hot, burnt gases must be ejected out of the cylinder. The exhaust valve (5) allows the evacuation of the burnt gases by bringing in fluid communication the combustion chamber with the exhaust duct, at the beginning of the rise of the piston, when fresh fuel mixture is transferred from the lower engine to the combustion chamber. The combined effects of the rising piston, transfer of fresh fuel mixture, and heat of the burnt gases all contribute to the effective evacuation of the burnt gases through opening (30), passageway (6), opening (31) and exhaust duct (10).

In conventional two-stroke engines, the exhaust duct opens on a lateral wall of the cylinder and extends up to a given height thereof. The volume of the cylinder corresponding to the lateral wall height comprising openings for the transfer ports (15) and the exhaust duct is wasted in terms of compression. With the present invention, the exhaust duct (10) does not open on the lateral wall of the cylinder anymore, but is located on top of it. This is highly advantageous because the hot gases naturally go up, and the volume fraction of the cylinder where compression can build up is thus increased. Furthermore, the transfer ports can now be distributed around the whole circumference of the lateral cylinder wall. It is possible to distribute as many as at least five transfer ducts, preferably at least six transfer ducts around the cylinder lateral wall. Increasing the number of ports allows their height (h) to be substantially reduced for a same total port area. With the present invention it is possible to design the transfer ports so that they extend over not more than a quarter of the total height of the combustion chamber when the piston is at its lowest position (i.e., h / H ≤ 1 / 4).

To further enhance the evacuation of the burnt gases, whilst ensuring that the fresh fuel mixture remains in the cylinder (one of two-stroke engines most recurrent problems), it is advantageous to orient the transfer ducts (14) so that the fuel mixture is transferred into the cylinder following a trajectory comprising a component tangential to the cylinder wall. This geometry imparts a spinning movement to the combustion fluid injected into the cylinder, which pushes further up the burnt gases which are thus more efficiently evacuated through the top of the cylinder and valve (5).

In four-stroke engines, a valve is required to evacuate the exhaust gases and a second valve to inject a fresh mixture of fuel and air. The present invention also encompasses four-stroke engines comprising a cylinder head assembly having at least one rotary exhaust valve as described above. The advantages of rotary valves over poppet valves, in particular at high revolution regimes can advantageously be obtained by using an injection rotary valve as described above.

## Claims

**1.** A cylinder head assembly (2) for an internal combustion engine having at least one cylinder housing containing a reciprocally movable piston along the central axis of revolution thereof, and a combustion chamber (3) on top of said piston, wherein said cylinder head assembly comprises a cavity (5A) in fluid communication with said combustion chamber (3), and at least a first rotary valve (5) nested in said cavity (5A), said valve,
• having a substantially spherical body defining a central axis of rotation normal to the cylinder central axis and
• comprising a passageway therethrough to bring the combustion chamber into intermittent fluid communication with an exhaust duct for evacuating the burnt gases, said passageway comprising a 90 deg bend connecting:
○ a first opening (31) to the exhaust duct substantially parallel to, preferably coaxial with the valve central axis of rotation, to
○ a second opening (30), such that by rotation of the valve round its axis of rotation, said second opening (30) can be intermittently brought into fluid communication with the combustion chamber (3), and further comprising
• a shaft (7) fixed to the valve and coaxial with the valve central axis of rotation and located opposite the exhaust duct (10), said shaft comprising connecting means to a drive for rotating the valve in correspondence with the operating strokes of the piston in the cylinder,
**characterized in that,**
the valve is rotatably mounted in cantilever within the cylinder head assembly through one or several bearings (8), all exclusively mounted around said shaft (7).

**2.** Cylinder head assembly according to claim 1, wherein said first passageway opening (31) to the exhaust duct (10) is provided with a beak (9) jutting out of the sphere's wall and engaging into an inlet section of the exhaust duct (10) having a complementary geometry such that the burnt gases leaving the passageway's beak undergo a venturi effect preventing them from flowing backwards into the circumferential gap between the beak and the inlet section of the exhaust duct.

**3.** Cylinder head assembly according to claim 1 or 2, wherein the rotary valve (5) sits on sealing means (12) to seal the passage between the combustion chamber and the rotary valve, said sealing means comprising a Belleville type washer.

**4.** Cylinder head assembly according to any of the preceding claims, wherein the rotary valve comprises sealing means (13) to seal the passage between the shaft (7) and the cavity (5A), said sealing means preferably comprising a Belleville type washer.

**5.** Cylinder head assembly according to any of the preceding claims, wherein the rotary valve (5) is mounted within the cylinder head assembly through at least two bearings (8).

**6.** Cylinder head assembly according to any of the preceding claims, wherein the second opening (30) to the combustion chamber is larger than the first opening (31) to the exhaust duct (10), the second opening (30) being preferably elongated in the direction of rotation, most preferably, the second opening (30) being offset with respect to the valve central axis of rotation.

**7.** Cylinder head assembly according to any of the preceding claims, further comprising an second rotary valve (25) which can be brought in intermittent fluid communication with said combustion chamber (3), said valve (25) having a substantially spherical body defining a central axis of rotation parallel to or coaxial with the central axis of rotation of the first rotary valve (5), and comprising:
• a passageway therethrough suitable for bringing in fluid communication a fuel & air injection line (20) with the combustion chamber (3), for injecting fresh fuel & air therein, said passageway comprising a 90 deg bend with:
• a first opening (31A) to the fuel & air injection line (20), wherein the passageway is substantially parallel to, preferably coaxial with the valve central axis of rotation, and
• a second opening (30A), such that by rotation of the valve round its axis of rotation, said second opening can be intermittently brought into fluid communication with the combustion chamber,
and wherein the first and second rotary valves (5, 25) are so mounted that upon rotation round their respective axis of rotation, the facing of their respective second openings (30, 30A) with the combustion chamber is off phase.

**8.** Internal combustion engine comprising at least one cylinder housing containing a reciprocally movable piston along the central axis of revolution thereof, and a combustion chamber on the top of said cylinder, wherein said combustion chamber is in fluid communication with a cylinder head assembly according to any of the preceding claims

**9.** Internal combustion engine according to claim 8, **characterized in that** it is a two stroke engine.

**10.** Internal combustion engine according to claim 9, wherein several transfer ports (15), distributed around the whole circumference of the cylinder above the piston head at its lowest position in the cylinder, are in fluid communication with transfer ducts (14), which have a tangential component with respect to the cylinder circumference such as to impart a spinning movement to the combustion fluid injected into the cylinder.

**11.** Internal combustion engine according to claim 9 or 10, wherein transfer ports (15), distributed round the circumference of the cylinder and through which transfer ducts (14) are in fluid communication with the combustion chamber (3), extend over not more than a quarter of the total height of the combustion chamber when the piston is at its lowest position.

**13.** Internal combustion engine according to any of claims 9 to 12, comprising at least five transfer ducts, preferably at least six transfer ducts (14) in fluid communication with the corresponding transfer ports.

**14.** Internal combustion engine according to claim 8 **characterized in that** it is a four stroke engine.

**15.** Internal combustion engine according to claim 14, comprising a cylinder head assembly according to claim 7.
